# FASCICULE DE BREVET EUROPEEN

(11) **EP 3 083 373 B1**
(45) Date de publication et mention de la délivrance du brevet: **28.08.2019**
(21) Numéro de dépôt: 14815343.0
(22) Date de dépôt: 17.12.2014
(51) Int. Cl.: B62D 27/06, B62D 29/00, B62D 25/08

(54) **MODULE DE FACE AVANT DE VÉHICULE AUTOMOBILE**
KRAFTFAHRZEUGFASSADENMODUL
MOTOR VEHICLE FAÇADE MODULE

(30) Priorité: 18.12.2013 FR 1362909
(43) Date de publication de la demande: 26.10.2016
(73) Titulaire: Valeo Systemes Thermiques, 78320 Le Mesnil Saint Denis (FR); Valeo Japan Co., Ltd., Saitama 360-0193 (JP)
(72) Inventeur: LANARD, Jean-Louis, F-78810 Feucherolles (FR); MESKIN, Issmail, F-78320 Le Mesnil-Saint-Denis (FR); DALLERY, Julien, Tokyo 160-0023 (JP); GUYOMARD, Jean-Nicolas, F-27930 Le Mesnil Fuguet (FR)
(74) Mandataire: Tran, Chi-Hai
(86) Numéro de dépôt international: PCT/EP2014/078318
(87) Numéro de publication internationale: WO 2015/091699

(56) Documents cités:
- EP-A2- 2 669 149
- WO-A1-03/051704
- DE-A1-102009 042 175
- DE-A1-102012 008 035
- FR-A1- 2 841 863
- US-A1- 2004 222 670
- US-A1- 2009 026 806

## Description

La présente invention concerne un module de face avant de véhicule automobile, et plus précisément un module de face avant de véhicule automobile composé de plusieurs parties distinctes.

Un module de face avant est un élément de structure susceptible d'intégrer divers équipements du véhicule tels que projecteurs, clignotants, avertisseur sonore, échangeur thermique, module de refroidissement, serrure de fermeture du capot et autres.

Le module de face avant, ainsi pourvu de ses équipements, constitue un module unitaire préparé et livré par l'équipementier au constructeur automobile pour être monté sur le véhicule. Le montage du module de face avant sur le véhicule se fait par raccordement aux éléments du châssis du véhicule, tels que des longerons, ailes ou coques, puis mise en place d'un pare-choc ou bouclier frontal rapporté sur le module.

Un module de face avant comporte généralement une pièce support pour un ou plusieurs radiateurs ou modules de refroidissements, pour les projecteurs avant et une poutre pare-choc qui participe à la protection des équipements du module en cas de choc frontal. Ces composants sont fixés entre eux de façon rigide afin de maintenir la géométrie et la cohésion de l'ensemble. Afin de mieux répondre à des contraintes de maintenance des radiateurs ou modules de refroidissement, il est connu d'avoir une pièce support réalisée en plusieurs parties distinctes. Par exemple, il est connu d'avoir une pièce support comportant une première partie comprenant la traverse supérieure, fixée entre ou au sommet des montants latéraux, et une deuxième partie comprenant une traverse inférieure avec des montants latéraux. La possibilité de désolidariser la traverse supérieure des montants latéraux permet de procéder à la maintenance des radiateurs du véhicule sans avoir recours au démontage des modules de refroidissements.

Il est également connu de réaliser les différentes parties de la pièce support en des matériaux différents. Par exemple, une première partie peut être réalisée en matériau renforcé, telle qu'un matériau hybride et une deuxième partie peut être réalisée en matériau plastique. La technologie matériau hybride combinant métal et matériau plastique renforce la tenue mécanique du plastique.

En général, c'est la partie la plus volumineuse qui est réalisée en matériau plastique, de manière à alléger au maximum la structure du module. En général, cette partie volumineuse est la deuxième partie qui comporte la traverse inférieure avec les montants latéraux et des projections latérales, la première partie comportant la traverse supérieure en matériau hybride. Cette conception particulière combinant différents matériaux, permet à la fois de répondre aux contraintes de légèreté et de faible coût de revient grâce aux éléments en matière plastique et également aux contraintes de tenue mécanique en cas de choc, grâce aux éléments en matériau hybride. En effet, un module de face avant entièrement réalisé en matière plastique ne permet pas de répondre aux exigences de sécurité des essais anti-collision («crash test»).

Cependant, dans le cas de pièce support comprenant plusieurs parties en matériaux différents, il est nécessaire de fixer les parties les unes aux autres par des moyens de fixation. La résistance au «crash test» apportée par ce type de conception peut être insuffisante. Lors d'un choc, les différentes parties peuvent subir des contraintes mécaniques pouvant engendrer la rupture des fixations entre la première partie et la deuxième partie, provoquant l'ouverture du capot du véhicule. WO 03 051 704 représente l'art antérieur le plus proche selon le préambule de la revendication 1.

L'invention vise à proposer un module de face avant de véhicule automobile composé de plusieurs parties distinctes, permettant de pallier un ou plusieurs inconvénients de l'art antérieur.

À cet effet, l'invention a pour objet un module de face avant de véhicule automobile comprenant une pièce support comportant:
- une première partie comprenant une traverse supérieure présentant un premier renfort,
- une deuxième partie en matériau plastique comprenant des montants latéraux et au moins deux portions configurées pour l'assemblage avec la première partie,
caractérisée en ce que au moins une desdites au moins deux portions comporte un second renfort, et en ce que- la traverse supérieure comporte à chacune de ses extrémités latérales un orifice traversant au moins le premier renfort,- la au moins une portion comportant ledit second renfort comprend un orifice traversant ledit second renfort, configuré pour coopérer avec l'orifice de la traverse supérieure afin de recevoir un moyen de fixation permettant d'assembler ces deux parties.

Ainsi, l'assemblage de la première partie du module de face avant avec la deuxième partie forme une liaison forte, permettant de garantir la tenue des fixations lors d'un choc du véhicule.

Ledit module de face avant peut en outre comporter une ou plusieurs caractéristiques suivantes, prises séparément ou en combinaison :
- Les aux moins deux portions comportent chacune un second renfort.
- Le second renfort est surmoulé, améliorant la rigidité et la résistance mécanique du matériau plastique des portions.
- Le moyen de fixation est monté selon un axe de fixation A, perpendiculaire aux montants latéraux, de sorte que sa tête soit orientée vers l'avant du véhicule.
- Le moyen de fixation est un insert avec vis, contribuant à former la liaison forte entre les parties assemblées.
- Les portions de la deuxième partie présentant le second renfort forment des projections latérales, la liaison forte est dans ce cas réalisée entre la traverse supérieure et les projections latérales.
- L'orifice est ménagé à l'extrémité des projections latérales, qui est adjacente à l'extrémité supérieure des montants latéraux.
- Les deux montants latéraux intègrent les portions de la deuxième partie comportant le second renfort, la liaison forte est dans ce cas réalisée entre la traverse supérieure et les montants latéraux.
- Le second renfort présente une longueur inférieure ou égale à la longueur des montants latéraux, sa longueur est optimisée de sorte que le second renfort s'étende d'une fixation à une autre fixation.
- L'orifice est ménagé à l'extrémité supérieure des montants latéraux.
- le second renfort est un matériau choisi parmi des matériaux à haute résistance élastique, en acier embouti, ou en aluminium embouti, ou en feuille de composite, conférant au renfort une résistance à des stress importants.
- La deuxième partie comprenant les deux montants latéraux, reliés entre eux par la traverse inférieure, et les projections latérales, est réalisée en une seule pièce, ce qui permet de limiter le nombre de fixations nécessaires pour constituer la pièce support.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 est une vue de face en perspective du module de face avant selon un premier mode de réalisation,
- la figure 2 est une vue de face en perspective du module de face avant selon un deuxième mode de réalisation,
- la figure 3 est une vue schématique en coupe latérale de l'assemblage de la traverse supérieure avec les montants latéraux selon le second mode de réalisation.

Dans ces figures, les éléments identiques portent les mêmes références.

Dans la description, les termes «supérieur» et «inférieur» sont définis par rapport à la direction verticale orientée selon la hauteur d'un véhicule monté.

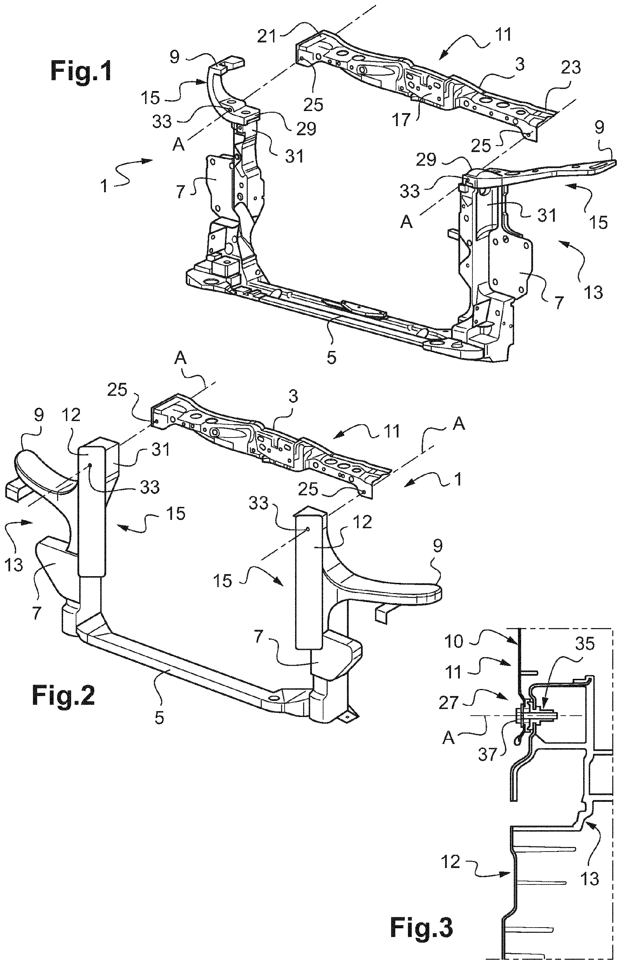

Dans le mode de réalisation représenté figure 1, le module de face avant 1 comporte une pièce support 3,5,7,9, représentée de manière simplifiée car elle est dépourvue des divers éléments tels que radiateurs, modules de refroidissement et autres éléments qui lui sont fixés lors du montage du véhicule. La pièce support 3,5,7,9 comporte deux parties distinctes. Une première partie 11 qui comprend la traverse supérieure 3. Une deuxième partie 13, en matériau plastique, comprenant des montants latéraux 7. Les deux montants latéraux 7 sont verticaux et sensiblement parallèles entre eux. Ils peuvent être reliés l'un à l'autre par une traverse inférieure 5 au niveau de leur extrémité inférieure. La traverse inférieure 5 est elle même sensiblement parallèle à la traverse supérieure 3. Les deux montants latéraux 7 peuvent comprendre également des projections latérales 9. Lesdites projections latérales 9, peuvent servir notamment à fixer le module de face avant 1 sur un élément de structure du véhicule. Les projections latérales 9 sont aptes à supporter au moins en partie les projecteurs (non représentés).

Le module de face avant 1 peut également être fixé au châssis du véhicule par les montants latéraux 7 eux-mêmes.

La traverse supérieure 3 présente un premier renfort 10 (visible sur la figure 3). Le premier renfort 10 est surmoulé par un matériau plastique selon une structure dite hybride. On entend par structure hybride un matériau comportant deux matériaux distincts comme par exemple un métal surmoulé par du matériau plastique. Le métal peut être par exemple de l'acier, ou de l'aluminium. Cette structure hybride permet d'améliorer la rigidité et la résistance mécanique du matériau plastique.

Le premier renfort 10 peut également être une feuille de composite. Les dites feuilles sont préalablement mise en forme par thermo formage puis surmoulées par un matériau plastique.

La traverse supérieure 3 comporte un logement central 17 apte à recevoir un support de serrure (non représenté) du capot du véhicule automobile.

La traverse supérieure 3 comporte également à chacune de ses extrémités latérales 21,23 un orifice 25 traversant au moins le premier renfort. L'ouverture de l'orifice 25 est dirigée vers l'avant du véhicule, et est configurée pour recevoir un moyen de fixation 27 (visible sur la figure 3) permettant d'assembler la traverse supérieure 3 avec la deuxième partie 13 de la pièce support 3,5,7,9 selon un axe de fixation A, perpendiculaire aux montants latéraux 7.

La deuxième partie 13 comprenant les deux montants latéraux 7, reliés entre eux par la traverse inférieure 5 et les projections latérales 9 peut notamment être réalisée en une seule pièce. Cette réalisation en une seule pièce permet de limiter le nombre de fixations nécessaires pour constituer la pièce support 3,5,7,9. Les montants latéraux 7 et la traverse inférieure 5 présentent vue de face une forme générale en «U». Les projections latérales 9 peuvent être assimilées à des bras s'étendant de manière sensiblement horizontale et latérale.

La deuxième partie 13 comporte au moins deux portions 15 configurées pour l'assemblage avec la première partie 11.

Au moins une portion 15 comporte un second renfort 12.

Les deux portions 15 peuvent également comporter chacune un second renfort 12 (visible figure 3). Dans le mode de réalisation présenté à la figure 1, les portions 15 présentant le second renfort 12 forment les projections latérales 9. Le second renfort 12 est surmoulé par du plastique afin de former les portions 15, selon une structure dite hybride comme décrite précédemment à propos de la première partie 11. A l'instar du premier renfort 10, le second renfort 12 peut être métallique. Le matériau métallique dans lequel est réalisé le second renfort 12 peut être par exemple choisi parmi des matériaux à haute résistance élastique, par exemple de l'acier embouti ou de l'aluminium embouti, conférant au second renfort 12 une résistance à des stress importants, de l'ordre de 500/600 MégaPascal («MPa»). Le second renfort 12 peut être également réalisé à partir d'un matériau composite tel qu'une feuille de composite.

Le second renfort 12 améliore ainsi la rigidité et la résistance mécanique du matériau plastique des portions 15. Les montants latéraux 7 et la traverse inférieure 5 sont quand à eux réalisés uniquement en matière plastique.

La au moins une portion 15 comportant un second renfort 12 comprend en outre un orifice 33 traversant ledit second renfort 12, configuré pour coopérer avec l'orifice 25 de la traverse supérieure 3 afin de recevoir un moyen de fixation 27 (visible figure 3) permettant d'assembler ces deux parties 1,5,3. L'orifice 33 est ménagé à l'extrémité 29 des projections latérales 9, qui est adjacente à l'extrémité supérieure 31 des montants latéraux 7.

On comprend donc que l'assemblage réalisé entre les deux portions 15 et la traverse supérieure 3 est réalisé entre deux parties comportant un renfort. Ainsi, l'assemblage de la première partie 11 du module de face avant 1 avec la deuxième partie 13 forme une liaison forte. Cette liaison forte permet de garantir la tenue des fixations lors d'un choc du véhicule, évitant de ce fait l'arrachage du capot du véhicule.

Nous allons maintenant décrire un second mode de réalisation de l'invention qui est représenté figure 2.

Dans ce mode de réalisation, le module de face avant 1 comporte également deux parties distinctes. Une première partie 11 comprenant la traverse supérieure 3, comportant un premier renfort 10. Une deuxième partie 13, réalisée en une seule pièce, en matériau plastique, comprenant les deux montants latéraux 7, la traverse inférieure 5 et les projections latérales 9

Dans ce mode réalisation, les deux montants latéraux 7 intègrent les portions 15 de la deuxième partie 13 comportant chacune un second renfort 12.

Les projections latérales 9 et la traverse inférieure 5 sont quand à elles réalisées uniquement en matière plastique.

Dans ce mode de réalisation, l'assemblage de la traverse supérieure 3 avec la deuxième partie 13 est réalisé au niveau des montants latéraux 7 de manière à obtenir une liaison forte. Les montants latéraux 7 comporte ainsi chacun à leur extrémité supérieure 31 un orifice 33, dont l'ouverture est dirigée vers l'avant du véhicule.

Le second renfort 12 sur lequel est surmoulé un matériau plastique peut notamment être apparent sur la face des montants latéraux 7 dirigée côté avant du véhicule et surmoulé à ses extrémités par le matériau plastique formant la deuxième partie 13 comme illustré sur la figure 3. Ce second renfort 12 permet d'apporter une résistance mécanique au matériau plastique uniquement dans les zones soumises au stress lors d'un choc du véhicule.

Le second renfort 12 présente des dimensions similaires à celle des montants latéraux 7 sur lesquels il est surmoulé. Son épaisseur est limitée au nécessaire, par exemple l'épaisseur du second renfort 12 est fixée pour conférer au matériau plastique des montants latéraux 7 une résistance à la rupture suffisante lors d'un choc. Par exemple, l'épaisseur des renforts est comprise entre 0,8 et 2 mm. La présence de second renfort 12 entraîne une diminution des efforts subis par le matériau plastique des montants latéraux 7 lors du choc.

La longueur du second renfort 12 est inférieure ou égale à la longueur des montants latéraux 7. Le rôle du second renfort 12 étant de garantir une liaison forte entre les pièces assemblées, sa longueur peut être optimisée de sorte qu'il s'étende uniquement d'une fixation à une autre fixation. Aussi, comme on peut le voir sur la figure 2, la longueur du second renfort 12 ne s'étend pas sur la totalité de la longueur des montants latéraux 7. En effet, la longueur du second renfort 12 s'étend de la fixation des montants latéraux 7 avec la traverse supérieure 3 à la fixation des montants latéraux 7 avec le châssis du véhicule. Cette limitation permet d'optimiser le poids de la deuxième partie 13 par-rapport à la résistance mécanique attendue de cette pièce.

Comme on peut le voir sur la figure 3, le moyen de fixation 27 utilisé pour l'assemblage est par exemple un insert avec vis 35 ou un boulon, ou tout autre moyen de fixation équivalent connu de l'homme du métier, en matériau métallique. Le moyen de fixation 27 est monté horizontalement selon l'axe de fixation A de sorte que sa tête 37 soit orientée vers l'avant du véhicule. Ainsi, lors d'un choc frontal du véhicule, les efforts exercés sur le moyen de fixation 27 sont orientés dans le même sens que les contraintes de serrage contribuant à maintenir le moyen de fixation 27 configuré pour assembler la première partie 11 avec la deuxième partie 13 de la pièce support 3,5,7,9.

On comprend donc que l'assemblage des première et deuxième parties de la pièce support d'un module de face avant de véhicule automobile étant réalisé entre deux portions comportant un renfort forme une liaison forte, garantissant la tenue des fixations lors d'un choc du véhicule.

## Revendications

1. Module de face avant (1) de véhicule automobile comprenant une pièce support (3,5,7,9) comportant:
- une première partie (11) comprenant une traverse supérieure (3) présentant un premier renfort (10),
- une deuxième partie (13) en matériau plastique comprenant :
• des montants latéraux (7), et
• au moins deux portions (15) configurées pour l'assemblage avec la première partie (11),
**caractérisée en ce que** au moins une desdites au moins deux portions (15) comporte un second renfort (12), et **en ce que**
- la traverse supérieure (3) comporte à chacune de ses extrémités latérales (21), (23) un orifice (25) traversant au moins le premier renfort (10),
- la au moins une portion (15) comportant ledit second renfort (12) comprend un orifice (33) traversant ledit second renfort (12), configuré pour coopérer avec l'orifice (25) de la traverse supérieure (3) afin de recevoir un moyen de fixation (27) permettant d'assembler ces deux parties (3),(15).

2. Module de face avant (1) de véhicule automobile selon la revendication 1, **caractérisé en ce que** lesdites aux moins deux portions (15) comportent chacune ledit second renfort (12).

3. Module de face avant (1) de véhicule automobile selon l'une des revendications 1 ou 2, **caractérisé en ce que** ledit second renfort (12) est surmoulé.

4. Module de face avant (1) de véhicule automobile selon l'une des revendications précédentes, **caractérisé en ce que** le moyen de fixation (27) est monté selon un axe de fixation A, perpendiculaire aux montants latéraux (7).

5. Module de face avant (1) de véhicule automobile selon l'une des revendications précédentes, **caractérisé en ce que** le moyen de fixation (27) est un insert avec vis (35).

6. Module de face avant (1) de véhicule automobile selon l'une des revendications précédentes, **caractérisé en ce que** les portions (15) de la deuxième partie (13) présentant le second renfort (12) forment des projections latérales (9).

7. Module de face avant (1) de véhicule automobile selon la revendication 6, **caractérisé en ce que** l'orifice (33) est ménagé à l'extrémité (29) des projections latérales (9) qui est adjacente à l'extrémité supérieure (31) des montants latéraux (7).

8. Module de face avant (1) de véhicule automobile selon l'une des revendications 1 à 5, **caractérisé en ce que** les deux montants latéraux (7) intègrent les portions (15) de la deuxième partie (13) comportant le second renfort (12) .

9. Module de face avant (1) de véhicule automobile selon la revendication 8, **caractérisé en ce que** le second renfort (12) présente une longueur inférieure ou égale à la longueur des montants latéraux (7).

10. Module de face avant (1) de véhicule automobile selon l'une des revendications 8 ou 9, **caractérisé en ce que** l'orifice (33) est ménagé à l'extrémité supérieure (31) des montants latéraux (7).

11. Module de face avant (1) de véhicule automobile selon l'une des revendications précédentes, **caractérisé en ce que** le second renfort (12) est réalisé en un matériau choisi parmi des matériaux à haute résistance élastique, en acier embouti, ou en aluminium embouti, ou en feuille de composite.

12. Module de face avant (1) de véhicule automobile selon l'une des revendications précédentes, **caractérisé en ce que** la deuxième partie (13) comprenant les deux montants latéraux (7) reliés entre eux par une traverse inférieure (5) et les projections latérales (9), est réalisée en une seule pièce.

## Patentansprüche

1. Frontend-Modul (1) für ein Kraftfahrzeug, welches ein Trägerteil (3,5,7,9) aufweist, umfassend:
einen ersten Teil (11), welcher einen oberen Querträger (3) aufweist, welcher eine erste Verstärkung (10) vorweist,
einen zweiten Teil (13) aus Kunststoffmaterial, aufweisend:
seitliche Stützen (7) und
mindestens zwei Abschnitte (15), welche zum Zusammenfügen mit dem ersten Teil (11) ausgelegt sind,
**dadurch gekennzeichnet, dass** zumindest einer der mindestens zwei Abschnitte (15) eine zweite Verstärkung (12) umfasst, und dass
der obere Querträger (3) an jedem seiner seitlichen Enden (21), (23) eine Öffnung (25) umfasst, welche zumindest die erste Verstärkung (10) durchdringt,
wobei der mindestens eine Abschnitt (15), welcher die zweite Verstärkung (12) umfasst, eine Öffnung (33) aufweist, welche die zweite Verstärkung (12) durchdringt, welche dafür ausgelegt ist, um mit der Öffnung (25) des oberen Querträgers (3) zusammenzuwirken, um ein Befestigungsmittel (27) aufzunehmen, welches es ermöglicht, um diese beiden Teile (3), (15) zusammenzufügen.

2. Frontmodul (1) für ein Kraftfahrzeug nach Anspruch 1, **dadurch gekennzeichnet, dass** die mindestens zwei Abschnitte (15) jeweils die zweite Verstärkung (12) umfassen.

3. Frontmodul (1) für ein Kraftfahrzeug nach einem der Ansprüche 1 oder 2, **dadurch gekennzeichnet, dass** die zweite Verstärkung (12) angeformt ist.

4. Frontmodul (1) für ein Kraftfahrzeug nach einem der vorhergehenden Ansprüche, **dadurch gekennzeichnet, dass** das Befestigungsmittel (27) gemäß einer Befestigungsachse A senkrecht zu den seitlichen Stützen (7) montiert ist.

5. Frontmodul (1) für ein Kraftfahrzeug nach einem der vorhergehenden Ansprüche, **dadurch gekennzeichnet, dass** das Befestigungsmittel (27) ein Einsatz mit Schraube (35) ist.

6. Frontmodul (1) für ein Kraftfahrzeug nach einem der vorhergehenden Ansprüche, **dadurch gekennzeichnet, dass** die Abschnitte (15) des zweiten Teils (13), welche die zweite Verstärkung (12) vorweisen, seitliche Vorsprünge (9) bilden.

7. Frontmodul (1) für ein Kraftfahrzeug nach Anspruch 6, **dadurch gekennzeichnet, dass** die Öffnung (33) an dem Ende (29) der seitlichen Vorsprünge (9) angeordnet ist, welches benachbart zu dem oberen Ende (31) der seitlichen Stützen (7) ist.

8. Frontmodul (1) für ein Kraftfahrzeug nach einem der Ansprüche 1 bis 5, **dadurch gekennzeichnet, dass** die seitlichen Stützen (7) die Abschnitte (15) des zweiten Teils (13) integrieren, welcher die zweite Verstärkung (12) umfasst.

9. Frontmodul (1) für ein Kraftfahrzeug nach Anspruch 8, **dadurch gekennzeichnet, dass** die zweite Verstärkung (12) eine Länge vorweist, welche kleiner als oder gleich der Länge der seitlichen Stützen (7) ist.

10. Frontmodul (1) für ein Kraftfahrzeug nach einem der Ansprüche 8 oder 9, **dadurch gekennzeichnet, dass** die Öffnung (33) an dem oberen Ende (31) der seitlichen Stützen (7) angeordnet ist.

11. Frontmodul (1) für ein Kraftfahrzeug nach einem der vorhergehenden Ansprüche, **dadurch gekennzeichnet, dass** die zweite Verstärkung (12) aus einem Material hergestellt ist, welches aus Materialien mit hoher elastischer Festigkeit, aus tief gezogenem Stahl, oder aus tief gezogenem Aluminium oder aus Verbundfolie ausgewählt wird.

12. Frontmodul (1) für ein Kraftfahrzeug nach einem der vorhergehenden Ansprüche, **dadurch gekennzeichnet, dass** der zweite Teil (13), welcher die zwei durch einen unteren Querträger (5) und die seitlichen Vorsprünge (9) miteinander verbundenen seitlichen Stützen (7) aufweist, aus einem Stück ausgeführt ist.

## Claims

1. Motor vehicle facade module (1) comprising a support part (3, 5, 7, 9) comprising:
- a first part (11) comprising an upper cross-member (3) with a first reinforcement (10);
- a second part (13) made of plastic material comprising:
• lateral uprights (7); and
• at least two portions (15) configured for the assembly with the first part (11),
**characterized in that** at least one of said at least two portions (15) comprises a second reinforcement (12), and **in that**
- the upper cross-member (3) comprises at each of its lateral ends (21, 23) a orifice (25) which passes through at least the first reinforcement (10) ;
- the at least one portion (15) comprising said second reinforcement (12) comprises an orifice (33) which passes through said second reinforcement (12), which is configured to cooperate with the orifice (25) in the upper cross-member (3) in order to receive a fastening means (27) making it possible to assemble these two parts (3, 15).

2. Motor vehicle facade module (1) according to Claim 1, **characterized in that** said at least two portions (15) each comprise said second reinforcement (12).

3. Motor vehicle facade module (1) according to one of Claims 1 or 2, **characterized in that** said second reinforcement (12) is over-molded.

4. Motor vehicle facade module (1) according to one of the preceding claims, **characterized in that** the fastening means (27) is fitted according to a securing axis A perpendicular to the lateral uprights (7).

5. Motor vehicle facade module (1) according to one of the preceding claims, **characterized in that** the fastening means (27) is an insert with a screw (35) .

6. Motor vehicle facade module (1) according to one of the preceding claims, **characterized in that** the portions (15) of the second part (13) with the second reinforcement (12) form lateral projections (9) .

7. Motor vehicle facade module (1) according to Claim 6, **characterized in that** the orifice (33) is provided in the end (29) of the lateral projections (9) which is adjacent to the upper end (31) of the lateral uprights (7).

8. Motor vehicle facade module (1) according to one of Claims 1 to 5, **characterized in that** the two lateral uprights (7) incorporate the portions (15) of the second part (13) comprising the second reinforcement (12).

9. Motor vehicle facade module (1) according to Claim 8, **characterized in that** the second reinforcement (12) has a length which is shorter than, or equal to, the length of the lateral uprights (7).

10. Motor vehicle facade module (1) according to one of Claims 8 or 9, **characterized in that** the orifice (33) is provided in the upper end (31) of the lateral uprights (7).

11. Motor vehicle facade module (1) according to one of the preceding claims, **characterized in that** the second reinforcement (12) is formed from a material selected from among materials with high elastic resistance, made of pressed steel, or pressed aluminium, or of a composite sheet.

12. Motor vehicle facade module (1) according to one of the preceding claims, **characterized in that** the second part (13) comprising the two lateral uprights (7), which are connected to one another by a lower cross-member (5) and the lateral projections (9), is made in a single piece.
